# EUROPÄISCHE PATENTSCHRIFT

(11) **EP 1 572 825 B1**
(45) Veröffentlichungstag und Bekanntmachung des Hinweises auf die Patenterteilung: **11.04.2007**
(21) Anmeldenummer: 03808680.7
(22) Anmeldetag: 02.07.2003
(51) Int. Cl.: C09J 7/02

(54) **SELBSTKLEBEFOLIE MIT RUTSCHHEMMENDER ABDECKSCHICHT**
SELF-ADHESIVE FILM COMPRISING AN ANTISKID COATING LAYER
FEUILLE AUTOADHESIVE COMPRENANT UNE COUCHE DE RECOUVREMENT ANTIDERAPANTE

(30) Priorität: 09.10.2002 DE 10247046
(43) Veröffentlichungstag der Anmeldung: 14.09.2005
(73) Patentinhaber: Uzin Tyro AG, 6374 Buochs (CH)
(72) Erfinder: SIEBER, Reto, CH-6019 Sigigen (CH); SIEBER, Marco, CH-6048 Horw (CH)
(74) Vertreter: Altenburg, Udo
(86) Internationale Anmeldenummer: PCT/EP2003/007072
(87) Internationale Veröffentlichungsnummer: WO 2004/035704

(56) Entgegenhaltungen:
- GB-A- 2 063 710
- NL-C- 1 000 700

## Beschreibung

Die Erfindung betrifft eine Selbstklebefolie zum Verlegen eines Fußbodenbelags, insbesondere eines Teppichbodens, auf einem Fußboden.

Es sind bereits Selbstklebefolien bzw. -Bänder bekannt, die eine auf beiden Oberflächen einer Trägerschicht aufgebrachte Haftkleberbeschichtung aufweisen. Solche Selbstklebefolien bzw. -Bänder werden beispielsweise zum Verkleben eines Fußbodenbelags auf einem Fußboden eingesetzt.

So ist aus der Deutschen Patentanmeldung DE 198 35 919.5 eine entsprechende Selbstklebefolie bekannt, welche an einer oberen, dem Fußbodenbelag zugewandten Oberfläche und an einer unteren, dem Fußboden zugewandten Oberfläche einer Trägerschicht mit einer Haftkleberbeschichtung beschichtet ist, wobei die Haftkleberbeschichtung auf beiden Oberflächen eine unterschiedliche Haftstärke aufweist und die Haftstärke auf der unteren Oberfläche geringer ist als diejenigen auf der oberen Oberfläche. Die Haftkleberbeschichtung mit der größeren Haftstärke an der oberen Oberfläche kann dabei vorzugsweise mit einem entfernbaren glatten Abdeckfilm abgedeckt sein, welcher lösbar haftend lückenlos an der entsprechenden Oberfläche anliegt, um somit eine leichtere Handhabung der entsprechenden Selbstklebefolie während des Verlegens und Verklebens eines Fußbodenbelags an einem Fußboden zu ermöglichen, insbesondere um ein ungewolltes Verkleben beispielsweise während des Transports einer entsprechenden Selbstklebefolie zu verhindern. Bevor jeweils ein Bodenbelag auf einer solchen Selbstklebefolie verklebt wird, wird eine solche Selbstklebefolie auf den Fußboden aufgebracht, wobei die Schutzfolie vorläufig noch nicht abgelöst wird. Der Bodenbelag wird zunächst noch unverklebt auf diese Schutzfolie aufgelegt. Dann wird der Bodenbelag üblicherweise zurecht geschoben und grob passend auf die Verlegemaße zugeschnitten. Danach wird der Bodenbelag zurückgerollt und das Schutzpapier entfernt, so dass der Bodenbelag nach entsprechendem Abrollen an der entsprechenden Stelle durch die nun freiliegende Haftkleberbeschichtung der entsprechenden Selbstklebefolie sicher gehalten wird.

In der praktischen Anwendung kann sich während des oben beschriebenen Vorgangs der Bodenbelag während des Zurückrollens auf Grund der glatten Oberfläche der Schutzfolie wieder verschieben, so dass ein exaktes Zuschneiden kaum möglich ist. Auch besteht die Gefahr, dass Personen, welche eine solche Verlegung eines Fußbodenbelags unter Verwendung der bekannten Selbstklebefolien vornehmen, auf der glatten Oberfläche der Schutzfolie der bereits auf dem Fußboden ausgelegten Selbstklebefolie ausrutschen und sich beim Sturz verletzen können.

Es ist daher die Aufgabe der vorliegenden Erfindung eine Selbstklebefolie vorzusehen, welche die geschilderten Probleme bei Verwendung von herkömmlichen Selbstklebefolien des Standes der Technik vermeidet, insbesondere eine sichere Verarbeitbarkeit und zuverlässige Verlegemöglichkeit bei gleichzeitig geringen Herstellungskosten bietet.

Die Aufgabe wird mit einer erfindungsgemäß mit einer Selbstklebefolie gemäß Anspruch 1 gelöst. Zweckmäßige Weiterbildungen sind in den anhängigen Ansprüchen definiert.

Die erfindungsgemäße Selbstklebefolie dient bevorzugt dem Verkleben eines Fußbodenbelags, insbesondere eines Teppichbodens, auf einem Fußboden.

Die Selbstklebefolie weist eine geeignete Trägerschicht auf. Bevorzugt besteht die Trägerschicht aus einer Kunststofffolie, z.B. Polypropylen- oder Polyethylenfolie, es ist prinzipiell jedoch auch jedes andere geeignete Material, wie PVC, Latex, oder ähnliches verwendbar. Insbesondere bildet die Trägerschicht dabei bevorzugt einen flächigen Träger für eine beidseitig aufgebrachte Haftkleberbeschichtung.

Erfindungsgemäß weist die Selbstklebefolie an einer oberen, dem Fußbodenbelag zugewandten Oberfläche und an einer unteren, dem Fußboden zugewandten Oberfläche eine Haftkleberbeschichtung auf. Dabei kann die Haftkleberbeschichtung und/oder die Haftstärke auf der unteren Oberfläche nur einen Bruchteil derjenigen auf der oberen Oberfläche betragen. Es können dazu auf jeder der beiden Oberflächen Haftkleber mit unterschiedlichen Klebekräften oder auf jeder Oberfläche jeweils der gleiche Haftkleber Verwendung finden. Auch können an der unteren und der oberen Oberfläche jeweils Haftkleberbeschichtungen mit unterschiedlichem Kleberauftragsgewicht vorgesehen sein. Als Haftkleber hat sich eine Acrylat-Dispersion, angereichert mit Harzen und mit darin enthaltenen UV- und Alterungsschutz bewährt, wobei jedoch auch jeder andere geeignete Haftkleber verwendbar ist, welcher insbesondere auch für Wasserdampf diffusionsfähig sein kann. Bevorzugt ist die Haftkleberbeschichtung vollflächig, sie kann jedoch auch abschnittsweise aufgebracht sein.

Geeigneterweise wählt man Haftkleber aus, welche gegen den Fußbodenbelag wie auch gegen den Fußboden eine konstante Klebkraft über einen gewissen Zeitraum aufweisen.

Geeignete Haftkleber zumindest für die Haftkleberbeschichtung der oberen Oberfläche können weichmacherbeständige Haftkleber sein.

Wie gesagt ist es zur Erzielung einer besonders zuverlässigen und haltbaren Verklebung des Fußbodenbelags mittels der erfindungsgemäßen Selbstklebefolie bei gleichzeitig rückstandsfreier Wiederablösbarkeit vom Fußboden bevorzugt, dass die untere Oberfläche eine Haftkleberbeschichtung mit geringerer Haftstärke als die Haftstärke der Haftkleberbeschichtung an der oberen Oberfläche aufweist. Es können dazu auf jeder der beiden Oberflächen unterschiedliche Haftkleber oder auf jeder der Oberflächen jeweils der gleiche Haftkleber Verwendung finden.

Erfindungsgemäß ist zumindest die Haftkleberbeschichtung der oberen Oberfläche mit einer entfernbaren Abdeckschicht abgedeckt, welche eine rutschhemmende Ausgestaltung aufweist.

Die erfindungsgemäße rutschhemmende Ausgestaltung einer entfernbaren Abdeckschicht zumindest der Haftkleberbeschichtung der oberen Oberfläche bietet einerseits den Schutz vor einem vorzeitigen Anhaften der erfindungsgemäß gestalteten Selbstklebefolie an einem zu verlegenden Fußbodenbelag oder einem vorzeitigen unerwünschten Verkleben schon während des Transports, andererseits bietet eine solche erfindungsgemäße Gestaltung den Vorteil, dass kein Verrutschen eines zur Verlegung provisorisch ausgelegten Fußbodenbelags auf der Selbstklebefolie mit der noch nicht entfernten Abdeckschicht erfolgt, und dass eine entsprechende erfindungsgemäße Selbstklebefolie nicht zu einem Sicherheitsrisiko wird, da durch die erfindungsgemäße Gestaltung ein Ausrutschen einer Person auf der entsprechenden Selbstklebefolie bzw. auf der Abdeckschicht verhindert wird.

Bevorzugt wird die rutschhemmende Ausgestaltung gemäß der Erfindung aus einer günstig realisierbaren Perforation der Abdeckschicht gebildet, mit im Wesentlichen flächig über die Abdeckschicht verteilten Perforationslöchern. "Im Wesentlichen flächig" meint dabei, dass sich die Perforationslöcher über die gesamte durchgehende Abdeckschicht verteilen, um so eine flächige rutschhemmende Ausgestaltung mit den oben geschilderten Vorteilen zu gewährleisten. Dabei ist es selbstverständlich möglich, dass die entsprechenden Perforationslöcher beispielsweise rasterförmig und/oder zu Gruppen zusammengefasst sind, welche entsprechende Muster, z.B. Rauten oder Kreise oder sonstige geometrische Muster oder sogar stilisierte Schriftzüge bilden können. Dies erfolgt jedoch immer erfindungsgemäß in der Art und Weise, dass die entsprechenden Perforationslöcher im Mittel über die gesamte Fläche verteilt angeordnet sind. Auch eine im Wesentlichen zufällige Verteilung von Perforationslöchern, flächenmäßig über die Abdeckschicht verteilt, ist möglich. Die entsprechenden Perforationslöcher können beispielsweise einen mittleren Abstand voneinander von wenigen Millimetern, beispielsweise von 5 mm bis zu einigen Zentimetern, beispielsweise 5 oder 10 cm, aufweisen. Die Querschnittsfläche der erfindungsgemäßen Perforationslöcher beträgt in Draufsicht bevorzugt weniger als 4 mm². Die Perforationslöcher können dabei insbesondere auch als Nadeldurchstichslöcher mit entsprechend kleiner Querschnittsfläche ausgestaltet sein. Durch eine entsprechende vorteilhafte Größe der Querschnittsfläche der einzelnen Perforationslöcher ist es ausgeschlossen, dass trotz der noch nicht entfernten entsprechenden Abdeckschicht der erfindungsgemäßen Selbstklebefolie bereits unter Umständen ein Anhaften des Fußbodenbelags an der oberen Oberfläche der erfindungsgemäßen Selbstklebefolie erfolgen kann, was die Verarbeitbarkeit verschlechtern würde.

Besonders in dem Fall, in welchem die Perforationslöcher durch Durchstechen der Abdeckschicht mit Nadeln erzeugt werden, ist es besonders vorteilhaft, eine Ausführungsform der Erfindung vorzusehen, bei welcher die einzelnen Perforationslöcher nach oben, also von der durchschnittlichen Ebene der oberen Oberfläche der Abdeckschicht zum Fußbodenbelag hin, vorstehenden Randbereich aufweisen. Diese können beispielsweise durch eine entsprechende Durchnadelung der Abdeckschicht von unten nach oben erzeugt werden. Durch diese vorstehenden Randbereiche kann eine besonders gute Rutschhemmung erzielt werden, da die rutschhemmende Wirkung der Perforationslöcher mit der rutschhemmenden Wirkung der vorstehenden Randbereiche kombiniert ist. Gleichzeitig ist eine solche Ausgestaltung besonders kostengünstig realisierbar.

Gemäß einer bevorzugten Ausführungsform der Erfindung kann die rutschhemmende Ausgestaltung der entfernbaren Abdeckschicht auch aus Vertiefungen in der Abdeckschicht bestehen. Für die Anordnung dieser Vertiefungen gilt das für die Anordnung der oben erwähnten Perforationslöcher gesagte entsprechend. Die Querschnittsform in Draufsicht solcher Vertiefungen, wie auch die Querschnittsform der Perforationslöcher, kann beispielsweise rund, oval, rautenförmig oder in sonstiger Wiese polygonal ausgeführt sein. Auf die Vertiefungen weisen bevorzugt eine Querschnittsfläche von weniger als 4 mm² auf Entsprechende Vertiefungen der Abdeckschicht sind besonders kostengünstig durch eine entsprechende Prägung der erfindungsgemäßen Abdeckschicht herstellbar.

Gemäß einer weiteren bevorzugten Ausführungsform kann die rutschhemmende Ausgestaltung auch aus Erhöhungen der Abdeckschicht, insbesondere gebildet durch Noppen, bestehen. Auch für die Erhöhungen gilt das vorher bezüglich der Perforationsöffnungen und der Vertiefungen hinsichtlich ihrer Anordnung und Gestaltung gesagte entsprechend.

Auch die gemäß der bevorzugten Ausführungsform vorgesehen Erhöhungen der Abdeckschicht können kostengünstig durch eine entsprechende Prägung realisiert werden.

Die erfindungsgemäße Gestaltung mit Vertiefungen und/oder Erhöhungen der Abdeckschicht kann dabei auch in der Art und Weise erfolgen, dass die Vertiefungen und/oder Erhöhungen der Abdeckschicht ein spezielles Muster bilden, wobei die jeweiligen Vertiefungen und/oder Erhöhungen dabei nicht nur, wie oben beschrieben, im Wesentlichen nur als punktuelle Vertiefungen bzw. Erhöhung flächig über die Abdeckschicht verteilt angeordnet sein, sondern es auch möglich ist, dass beispielsweise die Vertiefungen als Gräben, z.B. mäanderförmig, über die Fläche bzw. Grundebene der Abdeckschicht verlaufen, oder dass die Erhöhungen als Wälle flächig über die Abdeckschicht verlaufen.

Gemäß einer weiteren bevorzugten Ausführungsform der Erfindung kann die Abdeckschicht auch eine Aufrauung aufweisen, welche ebenfalls kostengünstig realisierbar ist.

Die erfindungsgemäß rutschhemmende Ausgestaltung der Abdeckschicht kann auch aus einer beliebigen Kombination aus Perforation, Vertiefungen, Erhöhungen oder einer Aufrauung der Abdeckschicht bestehen, d.h. die jeweiligen obigen Gestaltungsmöglichkeiten können in beliebiger Kombination mit einander in einer Produktgestaltung verwirklicht werden, was eine flexible Anpassung an unterschiedlichste Einsatzbereiche erlaubt.

Gemäß einer bevorzugten Ausführungsform der Erfindung kann die erfindungsgemäße Abdeckschicht aus Kunststofffolie bestehen, z.B. aus Polypropylen- oder Polyethylenfolie.

Gemäß einer weiteren bevorzugten Ausführungsform der vorliegenden Erfindung kann die Abdeckschicht auch aus einem geeigneten Papiermaterial, bevorzugt Silikonpapier, bestehen, besonders bevorzugt aus einem Krepppapiermaterial, welches schon an sich eine raue Oberfläche aufweist und somit auf besonders einfach und kostengünstige Weise eine rutschhemmende Oberflächegestaltung besitzt.

Gemäß einer weiteren bevorzugten Ausführungsform der vorliegenden Erfindung kann die Trägerschicht und/oder die Haftkleberbeschichtung zumindest einer Oberfläche der erfindungsgemäßen Selbstklebefolie ebenfalls mit Perforationslöchern perforiert sein. Bevorzugt beweisen diese Perforationslöcher, welche über die gesamte Fläche verteilt sein können, einen Abstand voneinander von weniger als 10 cm auf, und eine Querschnittsfläche von weniger als 4 mm². Es kann also sowohl nur die Trägerschicht, die Trägerschicht und die Haftkleberbeschichtung an der oberen Oberfläche, die Trägerschicht und die Haftkleberbeschichtung an der unteren Oberfläche, oder die Trägerschicht und sowohl die Hankleberbeschichtung an der oberen als auch an der unteren Oberfläche entsprechend perforiert ausgestaltet sein.

Entsprechende Gestaltungen mit perforierter Trägerschicht und/oder Haftkleberbeschichtung bieten den Vorteil, dass, insbesondere beim großflächigen Verlegen der erfindungsgemäßen Selbstklebefolie, eventuelle Restfeuchte vom Untergrund bzw. Fußboden durch entsprechende Perforationslöcher entweichen kann. Ferner kann dadurch eine Luftblasenbildung unter der Selbstklebefolie im verlegten Zustand vermieden werden.

Besonders bevorzugt ist dabei eine Produktgestaltung, bei welcher die Perforationslöcher in der Trägerschicht und der Haftkleberbeschichtung zumindest einer, bevorzugt beider, der Oberflächen fluchtend angeordnet sind. Eine solche Produktgestaltung kann dabei in einem Arbeitsschritt beispielsweise durch Durchstechen der entsprechenden Schichten erzielt werden, was die Herstellungskosten des entsprechenden Produkts verringert. Ferner wird durch eine solche fluchtende Anordnung die Wasserdampf und Luftdurchlässigkeit in besonderer Weise sichergestellt und verbessert.

Gemäß einer weiteren Ausfiihrungsform der vorliegenden Erfindung ist es besonders bevorzugt, falls nicht nur die Perforationslöcher der Trägerschicht und/oder der Haftkleberbeschichtung fluchtend angeordnet sind, sondern wenn darüber hinaus diese fluchtend angeordneten Perforationslöcher auch mit zumindest einigen der Perforationslöcher der Abdeckschicht fluchtend angeordnet sind. Mit dem Ausdruck, dass "zumindest einige der Perforationslöcher der Abdeckschicht mit entsprechende Perforationslöclier der Trägerschicht und/oder der Haftkleberbeschichtung fluchten" soll ausgedrückt werden, dass es auch denkbar ist, dass beispielsweise nur jedes zweite Perforationsloch der Abdeckschicht mit einem entsprechenden Perforationsloch der Trägerschicht und/oder der Haftkleberbeschichtung fluchtet, d.h. die jeweiligen durchschnittlichen Anzahlen von entsprechenden Perforationslöchern pro Flächeneinheit sind unterschiedlich. Dies erlaubt eine besonders flexible Anpassung an unterschiedlichste Verlegeverhältnisse, wobei insbesondere unterschiedlichen Anforderungen an eine Wasserdampfdurchlässigkeit oder ein entsprechenden Luftdurchlässigkeit Rechnung getragen werden kann. Generell bietet eine fluchtende Anordnung entsprechender Perforationslöcher den Vorteil, dass bereits bei Verlegung einer entsprechend gestalteten erfindungsgemäßen Selbstklebefolie eine Blasenbildung unter der Selbstklebefolie sicher verhindert wird noch bevor die Abdeckschicht vor einer entgültigen Verlegung eines Fußbodenbelags von der Selbstklebefolie entfernt wird.

Zur leichteren Verarbeitbarkeit der erfindungsgemäßen Selbstklebefolie, und zur Anpassung der entsprechenden Selbstklebefolie an unterschiedlichste Anwendungen, kann die Breite einer erfindungsgemäßen Selbstklebefolie bevorzugt in einem Bereich von 40 mm bis zu 2000 mm liegen. Insbesondere bevorzugt ist ein Bereich von 500 mm bis 1500 mm, wobei ein besonders bevorzugter Bereich im Bereich von 600 mm bis 1000 mm liegt. Eine bevorzugte Breite bei der Verwendung einer entsprechenden Selbstklebefolie zur Verlegung eines Fußbodenbelags auf Treppen ist 240 mm, während bei Verwendung zur Verlegung eines Fußbodenbelags auf Fußböden eine bevorzugte Breite von mindestens 350 mm vorteilhaft ist.

Die erfindungsgemäße Selbstklebefolie kann also zum einen auch als Selbstklebeband ausgebildet sein, welches insbesondere zur Verklebung eines Fußbodenbelags auf einem Fußboden in räumlich begrenzten Umfeld dienen kann oder zur Verklebung eines Fußbodenbelags nur in einem Randbereich auf einem Fußboden. Bevorzugt ist jedoch zum anderen insbesondere die großflächige Anwendung, d.h. Abdeckung und Verlegung, der erfindungsgemäßen Selbstklebefolie auf einem mit einem Fußbodenbelag zu belegenden Fußboden.

Zum Transport kann die Selbstklebefolie in Rollenform vorliegen.

Die Verwendung einer erfindungsgemäßen Selbstklebefolie erfolgt bevorzugt auf folgende Weise: der gesamte Fußboden wird mit der Selbstklebefolie belegt. Dabei richtet man die unteren Oberflächen in Richtung Fußboden. Die obere Oberfläche ist erfindungsgemäß mit der Abdeckschicht bedeckt. Dann wird der Fußbodenbelag provisorisch aufgelegt und gegebenenfalls zugeschnitten. Anschließend wird ein Teil des Fußbodenbelags wieder zurückgeschlagen, und der Abdeckfilm wird von diesem Teil der Selbstklebefolie entfernt. Der zurückgeschlagene Teil des Fußbodenbelags wird wieder auf die obere Oberfläche, deren Haftkleberbeschichtung nun frei liegt, geklappt und gegebenenfalls angepresst. Mit den übrigen Teilen des Fußbodenbelags wird auf gleich Weise verfahren, bis der gesamte Fußbodenbelag großflächig am Fußboden verklebt ist.

Es sei angemerkt, dass eine erfindungsgemäß gestaltete Selbstklebefolie bevorzugt rückstandsfrei von einem Fußboden auch wiederabgezogen werden kann. Dabei trennt sich die erfindungsgemäße Selbstklebefolie vom Fußboden und bleibt mit ihrer Oberseite an der Unterseite des Fußbodenbelags haften.

Durch geeignete Auswahl der verwendeten Haftkleberbeschichtung bzw. der verwendeten Haftkleber zusammen mit der Trägerschicht wird sichergestellt, dass zu jedem Zeitpunkt eine rückstandsfreie Wiederablösbarkeit der erfindungsgemäßen Selbstklebefolie zumindest vom Fußboden aber u.U. auch vom Fußbodenbelag gegeben ist.

In einer bevorzugten Ausführungsform der Erfindung wird die unterschiedliche Haftstärke bzw. Haftkraft der beiden Oberflächen der Haftkleberbeschichtung durch unterschiedliche Kleberauftragsgewichte bewirkt, wobei die Oberfläche mit der größeren Haftstärke ein höheres Kleberauftragsgewicht aufweist.

Besonders bevorzugt ist eine Ausführungsform, bei welcher das Kleberauftragsgewicht im Trockenzustand zumindest auf der oberen Oberfläche im Bereich von 5 bis 250 g/m² und insbesondere zumindest auf der unteren Oberfläche im Bereich von 5 bis 80 g/m², insbesondere von 10 bis 30 g/m², liegt.

Mit "Kleberauftragsgewicht im Trockenzustand" ist das Kleberauftragsgewicht der getrockneten Klebstoffmasse gemeint, welche nach dem Auftrag in einem Wärmeschrank bei 70° C eine Stunde gewärmt und getrocknet wird. Dann erfolgt die entsprechende Gewichtsmessung des Klebstoffauftrags.

Da jeweils Haftkleber mit unterschiedlichen Klebekräften auf den Oberflächen aufgebracht werden können, ist nicht allein das Kleberauftragsgewicht für eventuell unterschiedliche Haftstärken verantwortlich, sondern auch die eventuell unterschiedlichen Klebekräfte der verwendeten Haftkleber.

Als allgemein gültiges Messverfahren für die Haftstärke einer Hafudeberbeschichtung dient die Messung der Haftkraft nach DIN 1939. Dabei wird die Kraft gemessen, die zum Abziehen der Selbstklebefolie, welche mit der zu untersuchenden Haftkleberbeschichtung einer bestimmten Klebekraft und eines bestimmten Auftragsgewichtes versehen ist, benötigt wird. Dabei beträgt nach der Prüfnorm die Breite der Selbstklebefolie 25 mm, und als Klebepartner der Selbstklebefolie dient eine Stahloberfläche.

Bevorzugt liegt die nach DIN 1939 gemessene Haftkraft der Haftkleberbeschichtung zumindest der unteren Oberfläche in einem Bereich von 0,5 bis 5 N. Bevorzugter ist ein Bereich von 1,5 bis 4,5 N und am meisten bevorzugt ist ein Haftkraftbereich von 2,0 bis 2,6 N.

Wie schon angesprochen, können auf jeder der beiden Oberflächen unterschiedliche Haftkleber z.B. mit unterschiedlichen Klebekräften oder auf jeder Oberfläche jeweils der gleiche Haftkleber Verwendung finden.

Weitere Vorteile, Merkmale und Anwendungsmöglichkeiten der vorliegenden Erfindung werden sich aus der nachfolgenden Beschreibung mit Bezug auf die Zeichnungen ergeben, in welchen:
- Fig. 1: eine seitliche Schnittansicht einer ersten bevorzugten Ausführungsform der vorliegenden Erfindung ist;
- Fig. 2: eine seitliche Schnittansicht einer zweiten bevorzugten Ausführungsform der vorliegenden Erfindung ist;
- Fig. 3: eine seitliche Schnittansicht einer dritten bevorzugten Ausführungsform der vorliegenden Erfindung ist;
- Fig. 4: eine seitliche Schnittansicht einer vierten bevorzugte Ausführungsform der vorliegenden Erfindung ist; und
- Fig. 5: eine seitliche Schnittansicht einer fünften bevorzugten Ausführungsform der vorliegenden Erfindung ist.

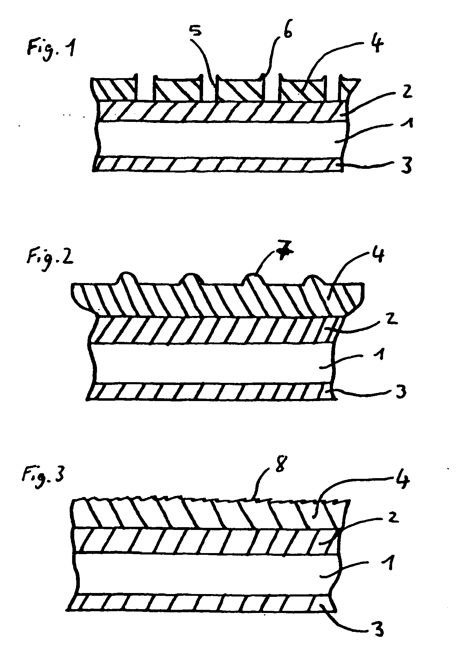

In allen Figuren 1 bis 5 bezeichnet allgemein Bezugszeichen 1 die Trägerschicht der erfindungsgemäßen Selbstklebefolie, Bezugszeichen 2 bezeichnet die obere, dem Fußbodenbelag zugewandte Haftkleberbeschichtung, Bezugszeichen 3 bezeichnet die untere, dem Fußboden zugewandte Haftkleberbeschichtung und Bezugszeichen 4 bezeichnet die entfernbare Abdeckschicht. Alle Größenverhältnisse in den Figuren geben zwar die generellen Relationen der einzelnen Gestaltungsmerkmale zueinander wieder, sie sind zur Verdeutlichung jedoch nicht genau maßstabsgerecht dargestellt. Die Figuren stellen insofern im Wesentlichen schematische Veranschaulichungen der bevorzugten Ausführungsformen dar.

Fig. 1 zeigt eine seitliche Schnittansicht einer ersten bevorzugten Ausführungsform der vorliegenden Erfindung. Dabei ist die entfernbare Abdeckschicht 4 auf der oberen Haftkleberbeschichtung 2 mit einer Perforation versehen, welche aus im Wesentlichen flächig über die Abdeckschicht verteilte Perforationslöcher 5 besteht.

Wie aus Fig. 1 ersichtlich, weisen die einzelnen Perforationslöcher 5 nach oben vorstehende Randbereiche 6 auf, welche beispielsweise durch den Herstellungsprozess entsprechender Perforationslöcher 5 erzeugt werden können. So ergibt eine Durchnadelung der entsprechend gestalteten erfindungsgemäßen Abdeckschicht 4 von der Unterseite her eine entsprechende Materialveränderung, welche in den Randbereichen 6 der Perforationslöcher 5 zu entsprechenden Auswülstungen führt. Erfolgt eine Durchnadelung beispielsweise von der Oberseite her, so können sich diese Randbereiche auch kraterförmig nach unten erstrecken, so dass die Oberfläche der entsprechenden Abdeckschicht kraterförmig nach innen abfallende Randbereiche der einzelnen Perforationslöcher 5 aufweist. Durch die Perforationslöcher 5 und die nach oben über die durchschnittliche Ebene der Oberfläche der Abdeckschicht vorstehenden Randbereiche 6 bietet die erfindungsgemäße Selbstklebefolie eine erste bevorzugte Ausführungsform der rutschhemmenden Ausgestaltung der entfernbaren Abdeckschicht 4 an ihrer oberen, dem Fußbodenbelag zugewandten Oberfläche. Die Abdeckschicht gemäß Fig. 1 besteht bevorzugt aus einer Kunststofffolie oder einem geeigneten Papier bzw. Papiermaterial.

Fig. 2 zeigt eine seitliche Schnittansicht einer zweiten bevorzugten Ausführungsform der erfindungsgemäßen Selbstklebefolie, bei welcher Abdeckschicht Erhöhungen 7 der Abdeckschicht 4 in Form von halbkugelförmig ausgebildeten Noppen ausgebildet sind. In seitlicher Schnittansicht ist auch jede andere Form von Noppen, beispielsweise eine eckig über die Fläche der Abdeckschicht vorstehende Gestaltung denkbar. Auch die in Fig. 2 dargestellte Ausführungsform der erfindungsgemäßen Abdeckschicht besteht bevorzugt aus einer Kunststofffolie oder einem geeigneten Papier bzw. Papiermaterial.

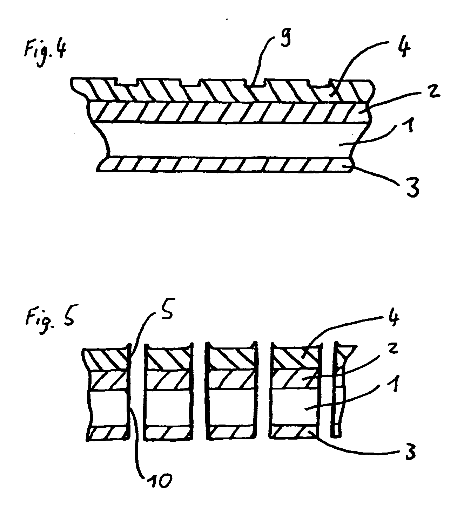

Fig. 3 zeigt in einer seitlichen Schnittansicht eine dritte bevorzugte Ausführungsform der vorliegenden Erfindung, wobei dort die Abdeckschicht 4 an sich eine aufgeraute Oberfläche 8 aufweist, welche eine rutschhemmende Ausgestaltung bietet, um somit ein Verrutschen eines darauf gelegten Fußbodenbelags oder ein Ausrutschen einer auf die Abdeckschicht der erfindungsgemäßen Selbstklebefolie tretenden Person wirksam zu verhindern. Die Abdeckschicht 4 gemäß Fig. 3 kann dabei entweder aus einer entsprechend oberflächlich aufgerauten Kunststofffolie bestehen oder aus einem geeigneten Papiermaterial, bevorzugt aus einem geeigneten Krepppapiermaterial.

Fig. 4 zeigt in einer seitlichen Schnittansicht eine vierte bevorzugte Ausführungsform der vorliegenden Erfindung, wobei hier die Abdeckschicht 4 mit rutschhemmenden Vertiefungen 9 versehen ist. In einer Draufsicht können diese Vertiefungen beispielsweise rund, oval, aber auch polygonal mehreckig, z.B. aber auch quadratisch, ausgestaltet sein, wobei deren bevorzugte Größe in ihrer Querschnittsfläche weniger als 4 mm² beträgt. Die Tiefe solcher Vertiefungen hängt von der Gesamtdicke der entsprechenden Abdeckschicht ab, sie kann bevorzugt einige µm bis zu einem 1 mm betragen. Die Abdeckschicht 4 gemäß Fig. 4 besteht bevorzugt aus einer Kunststofffolie, kann jedoch auch, wie auch die anderen dargestellten Ausführungsformen der vorherigen Figuren, aus einer geeigneten Papierschicht, insbesondere einem Krepppapier, bestehen. Die Form der Vertiefungen, welche in der Seitenansicht im Fall der Fig. 4 als rechtwinklig dargestellt ist, kann beispielsweise auch kraterförmig, kegelförmig oder in sonstiger Weise als Vertiefung gestaltet sein.

Fig. 5 zeigt eine fünfte bevorzugte Ausführungsform der vorliegenden Erfindung, wobei hier neben der Perforation der Abdeckschicht 4 mit entsprechenden Perforationslöchem 5 ebenfalls die Haftkleberbeschichtung 2 und 3 sowie die Trägerschicht 1 der erfindungsgemäßen Selbstklebefolie mit Perforationslöchern 10 versehen ist. Die Ausführungsform gemäß Fig. 5 zeigt eine fluchtende Anordnung der jeweiligen Perforationslöcher 5 und 10, so dass eine möglichst gute Wasserdampfdurchlässigkeit und/oder Luftdurchlässigkeit bereits bei Verlegung der erfindungsgemäßen Selbstklebefolie mit noch nicht entfernte Abdeckschicht auf einem Fußboden gegeben ist.

Bei einer Gestaltung gemäß Fig. 5 ist es auch möglich, dass zusätzlich noch andere rutschhemmende Ausgestaltungen, wie in den vorherigen Figuren dargestellt, vorgesehen sind. Ferner ist es möglich, dass die Perforationslöcher 10 nicht mit allen Perforationslöchern 5 fluchten.

Es sei angemerkt, dass selbstverständlich jede beliebige Interkombination der einzelnen bevorzugten Ausführungsformen einer rutschhemmenden Ausgestaltung der entfernbaren Abdeckschicht der Selbstklebefolie gemäß der Erfindung denkbar ist. Insbesondere sei angemerkt, dass sich die jeweiligen Ausführungsformen der rutschhemmenden Ausgestaltung der erfindungsgemäßen Abdeckschicht im Wesentlichen flächig über die gesamte Fläche der Abdeckschicht der erfindungsgemäßen Selbstklebefolie verteilt erstrecken.

## Patentansprüche

1. Selbstklebefolie, zum Verkleben eines Fußbodenbelags, insbesondere eines Teppichbodens, auf einem Fußboden, mit einer Trägerschicht (1), welche an einer oberen, dem Fußbodenbelag zugewandten Oberfläche und an einer unteren, dem Fußboden zugewandten Oberfläche mit einer Haftkleberbeschichtung (2, 3) beschichtet ist, wobei zumindest die Haftkleberbeschichtung (2) der oberen Oberfläche mit einer entfernbaren Abdeckschicht (4) abgedeckt ist, welche eine rutschhemmende Ausgestaltung (5, 6, 7, 8, 9) aufweist.

2. Selbstklebefolie nach Anspruch 1, wobei die rutschhemmende Ausgestaltung aus einer Perforation mit im Wesentlichen flächig über die Abdeckschicht (4) verteilten Perforationslöchern (5) besteht.

3. Selbstklebefolie nach Anspruch 2, wobei die einzelnen Perforationslöcher (5) nach oben vorstehende Randbereiche (6) aufweisen.

4. Selbstklebefolie nach Anspruch 2 oder 3, wobei die einzelnen Perforationslöcher (5) eine Querschnittsfläche von weniger als 4 mm² aufweisen.

5. Selbstklebefolie nach einem der Ansprüche 1 bis 4, wobei die rutschhemmende Ausgestaltung aus im Wesentlichen flächig über die Abdeckschicht (4) verteilten Vertiefungen (9) in der Abdeckschicht (4) besteht.

6. Selbstklebefolie nach einem der Ansprüche 1 bis 5, wobei die rutschhemmende Ausgestaltung aus im Wesentlichen flächig über die Abdeckschicht (4) verteilten Erhöhungen (7), insbesondere Noppen, der Abdeckschicht (4) besteht.

7. Selbstklebefolie nach einem der Ansprüche 1 bis 6, wobei die rutschhemmende Ausgestaltung aus einer Aufrauung (8) der Oberfläche der Abdeckschicht (4) besteht.

8. Selbstklebefolie nach einem der Ansprüche 1 bis 7, wobei die Abdeckschicht (4) aus einer Kunststofffolie besteht.

9. Selbstklebefolie nach einem der Ansprüche 1 bis 8, wobei die Abdeckschicht (4) aus einem Papiermaterial, bevorzugt ein Silikonpapier, bevorzugter aus einem Krepppapiermaterial, besteht.

10. Selbstklebefolie nach einem der Ansprüche 1 bis 9, wobei die Trägerschicht (1) aus Kunststofffolie besteht

11. Selbstklebefolie nach einem der Ansprüche 1 bis 10, wobei die Trägerschicht (1) und/oder die Haftkleberbeschichtung (2, 3) zumindest einer Oberfläche perforiert ist bzw. sind, mit Perforationslöchern (10), welche über die ganze Fläche in einem Abstand voneinander von bevorzugt weniger als 10 cm verteilt sind und eine Querschnittsfläche von weniger als 4 mm² aufweisen.

12. Selbstklebefolie nach Anspruch 11, wobei die Perforationslöcher (10) in der Trägerschicht (1) und der Haftkleberbeschichtung (2, 3) zumindest einer der Oberflächen fluchtend angeordnet sind.

13. Selbstklebefolie nach Anspruch 11 oder 12, wobei die Perforationslöcher (10) in der Trägerschicht (1) und/oder der Haftkleberbeschichtung (2, 3) zumindest einer der Oberflächen fluchtend mit zumindest einigen der Perforationslöcher (5) der Abdeckschicht (4) angeordnet sind.

14. Selbstklebefolie nach einem der Ansprüche 1 bis 13, wobei ihre Breite in einem Bereich von 40 mm bis 2000 mm liegt, insbesondere in einem Bereich von 500 mm bis 1500 mm, und insbesondere in einem Bereich von 600 mm bis 1000 mm liegt, wobei ihre Breite bei Verwendung für Treppen insbesondere 240 mm, und bei Verwendung auf Fußböden mindestens 350 mm beträgt.

15. Selbstklebefolie nach einem der Ansprüche 1 bis 14, wobei die untere Oberfläche eine Haftkieberbeschichtung mit geringerer Haftstärke als die Haftstärke der Haftkleberbeschichtung an der oberen Oberfläche aufweist.

16. Selbstklebefolie nach Anspruch 15, wobei unterschiedliche Kleberauftragsgewichte an beiden Oberflächen zur Erzielung unterschiedlicher Haftstärken vorgesehen sind, wobei die Oberfläche mit der größeren Haftstärke ein höheres Kleberauftragsgewicht aufweist.

17. Selbstklebefolie nach Anspruch 16, wobei das Kleberauftragsgewicht im Trockenzustand zumindest auf der oberen Oberfläche im Bereich von 5 bis 250 g/m² und insbesondere zumindest auf der unteren Oberfläche im Bereich von 5 bis 80 g/m², insbesondere von 10 bis 30 g/m² liegt.

18. Selbstklebefolie nach einem der Ansprüche 1 bis 17, wobei zumindest die Haftkleberbeschichtung an der oberen Oberfläche aus weichmacherbeständigem Haftkleber besteht

19. Selbstklebefolie nach einem der Ansprüche 1 bis 18, wobei die Haftkleberbeschichtung aus jeweils unterschiedlichen Haftklebern auf der oberen bzw. der unteren Oberfläche besteht.

20. Selbstklebefolie nach einem der Ansprüche 1 bis 19, wobei die Haftstärke zumindest der unteren Oberfläche eine Haftkraft (gemessen nach DIN 1939) in der Größenordnung von 0,5 bis 5 N, insbesondere von 1,5 bis 4,5 N und insbesondere von 2,0 bis 2,6 N aufweist.

## Claims

1. Self-adhesive film, for adhering a floor covering, more especially a carpet base, on a floor, said film having a carrier layer (1), which is coated, on an upper surface facing the floor covering and on a lower surface facing the floor, with a contact adhesive coating (2, 3), wherein at least the contact adhesive coating (2) of the upper surface is covered with a removable cover layer (4), which has a slip-proof configuration (5, 6, 7, 8, 9).

2. Self-adhesive film according to claim 1, wherein the slip-proof configuration comprises a perforation with perforation holes (5) distributed in a substantially areal manner over the cover layer (4).

3. Self-adhesive film according to claim 2, wherein the individual perforation holes (5) have upwardly protruding edge regions (6).

4. Self-adhesive film according to claim 2 or 3, wherein the individual perforation holes (5) have a cross-sectional area of less than 4 mm².

5. Self-adhesive film according to one of claims 1 to 4, wherein the slip-proof configuration comprises indentations (9) in the cover layer (4), which are distributed in a substantially areal manner over the cover layer (4).

6. Self-adhesive film according to one of claims 1 to 5, wherein the slip-proof configuration comprises raised portions (7), more especially nubs, on the cover layer (4), which are distributed in a substantially areal manner over the cover layer (4).

7. Self-adhesive film according to one of claims 1 to 6, wherein the slip-proof configuration comprises a roughening (8) of the surface of the cover layer (4).

8. Self-adhesive film according to one of claims 1 to 7, wherein the cover layer (4) comprises a plastics material film.

9. Self-adhesive film according to one of claims 1 to 8, wherein the cover layer (4) comprises a paper material, preferably a silicone paper, more preferably a crepe paper material.

10. Self-adhesive film according to one of claims 1 to 9, wherein the carrier layer (1) comprises a plastics material film.

11. Self-adhesive film according to one of claims 1 to 10, wherein the carrier layer (1) and/or the contact adhesive coating (2, 3), at least of one surface, are/is perforated with perforation holes (10), which are distributed over the whole area at a spacing from one another of preferably less than 10 cm and have a cross-sectional area of less than 4 mm².

12. Self-adhesive film according to claim 11, wherein the perforation holes (10) in the carrier layer (1) and in the contact adhesive coating (2, 3) of at least one of the surfaces are disposed so as to be in alignment.

13. Self-adhesive film according to claim 11 or 12, wherein the perforation holes (10) in the carrier layer (1) and/or in the contact adhesive coating (2, 3) of at least one of the surfaces are disposed so as to be in alignment with at least some of the perforation holes (5) of the cover layer (4).

14. Self-adhesive film according to one of claims 1 to 13, wherein its width lies within a range of between 40 mm and 2000 mm, more especially within a range of between 500 mm and 1500 mm, and most especially within a range of between 600 mm and 1000 mm, its width being more especially 240 mm when used for steps and at least 350 mm when used on floors.

15. Self-adhesive film according to one of claims 1 to 14, wherein the lower surface has a contact adhesive coating with a smaller bonding strength than the bonding strength of the contact adhesive coating on the upper surface.

16. Self-adhesive film according to claim 15, wherein different adhesive coating weights are provided on the two surfaces to achieve different bonding strengths, the surface with the greater bonding strength having a greater adhesive coating weight.

17. Self-adhesive film according to claim 16, wherein the adhesive coating weight in the dry state, at least on the upper surface, lies within the range of between 5 and 250 g/m² and more especially, at least on the lower surface, lies within the range of between 5 and 80 g/m², and most especially between 10 and 30 g/m².

18. Self-adhesive film according to one of claims 1 to 17, wherein at least the contact adhesive coating on the upper surface comprises a plasticiser-resistant contact adhesive.

19. Self-adhesive film according to one of claims 1 to 18, wherein the contact adhesive coating comprises different contact adhesives on the upper and lower surfaces respectively.

20. Self-adhesive film according to one of claims 1 to 19, wherein the bonding strength at least of the lower surface has a bonding force (measured in accordance with DIN 1939) in the order of magnitude between 0.5 and 5 N, more especially between 1.5 and 4.5 N and most especially between 2.0 and 2.6 N.

## Revendications

1. Feuille autoadhésive pour le collage d'un revêtement de sol, en particulier d'une moquette, sur un sol, comprenant une couche porteuse (1) enduite d'une couche d'adhésif de contact (2, 3) sur une face supérieure tournée vers le revêtement de sol et sur une face inférieure tournée vers le sol, **caractérisée en ce que** la couche d'adhésif de contact (2) de la face supérieure est recouverte d'une couche de recouvrement enlevable (4) qui présente une configuration antidérapante (5, 6, 7, 8, 9) .

2. Feuille autoadhésive selon la revendication 1, **caractérisée en ce que** la configuration antidérapante est constituée par une perforation avec des trous de perforation (5) répartis sensiblement sur toute la surface de la couche de recouvrement (4).

3. Feuille autoadhésive selon la revendication 2, **caractérisée en ce que** les trous de perforation (5) comportent chacun des zones de bord (6) en saillie vers le haut.

4. Feuille autoadhésive selon la revendication 2 ou 3, **caractérisée en ce que** les trous de perforation (5) présentent chacun une aire de section inférieure à 4 mm².

5. Feuille autoadhésive selon une des revendications 1 à 4, **caractérisée en ce que** la configuration antidérapante est constituée par des creux (9) ménagés dans la couche de recouvrement (4) et répartis sensiblement sur toute la surface de celle-ci.

6. Feuille autoadhésive selon une des revendications 1 à 5, **caractérisée en ce que** la configuration antidérapante est constituée par des reliefs (7), en particulier par des plots, ménagés sur la couche de recouvrement (4) et répartis sensiblement sur toute la surface de celle-ci.

7. Feuille autoadhésive selon une des revendications 1 à 6, **caractérisée en ce que** la configuration antidérapante est constituée par une rugosité (8) de la surface de la couche de recouvrement (4).

8. Feuille autoadhésive selon une des revendications 1 à 7, **caractérisée en ce que** la couche de recouvrement (4) est constituée par une feuille en matière plastique.

9. Feuille autoadhésive selon une des revendications 1 à 8, **caractérisée en ce que** la couche de recouvrement (4) est constituée de matériau à base de papier, de préférence de papier siliconé, mieux encore de matériau à base de papier crêpé.

10. Feuille autoadhésive selon une des revendications 1 à 9, **caractérisée en ce que** la couche porteuse (1) est constituée par une feuille en matière plastique.

11. Feuille autoadhésive selon une des revendications 1 à 10, **caractérisée en ce que** la couche porteuse (1) et/ou la couche d'adhésif de contact (2, 3) d'au moins une face est, respectivement sont perforée(s) avec des trous de perforation (10) qui sont répartis sur toute la surface avec un écartement mutuel de préférence inférieur à 10 cm et qui présentent une aire de section inférieure à 4 mm².

12. Feuille autoadhésive selon la revendication 11, **caractérisée en ce que** les trous de perforation (10) de la couche porteuse (1) et de la couche d'adhésif de contact (2, 3) d'au moins une des faces sont disposés dans l'alignement les uns des autres.

13. Feuille autoadhésive selon la revendication 11 ou 12, **caractérisée en ce que** les trous de perforation (10) de la couche porteuse (1) et/ou de la couche d'adhésif de contact (2, 3) d'au moins une des faces sont disposés dans l'alignement d'au moins certains des trous de perforation (5) de la couche de recouvrement (4).

14. Feuille autoadhésive selon une des revendications 1 à 13, **caractérisée en ce que** sa largeur se situe dans une plage de 40 mm à 2 000 mm, en particulier dans une plage de 500 mm à 1 500 mm, et en particulier dans une plage de 600 mm à 1 000 mm, sa largeur étant en particulier de 240 mm en cas d'emploi pour des escaliers et d'au moins 350 mm en cas d'emploi sur des sols.

15. Feuille autoadhésive selon une des revendications 1 à 14, **caractérisée en ce que** la face inférieure comporte une couche d'adhésif de contact d'adhérence inférieure à l'adhérence de la couche d'adhésif de contact de la face supérieure.

16. Feuille autoadhésive selon la revendication 15, **caractérisée en ce que** le poids de l'adhésif appliqué sur les deux faces est différent afin d'obtenir des adhérences différentes, la face d'adhérence supérieure présentant un poids d'adhésif appliqué supérieur.

17. Feuille autoadhésive selon la revendication 16, **caractérisée en ce que** le poids d'adhésif appliqué se situe, à l'état sec, dans une plage de 5 à 250 g/m² au moins sur la face supérieure et dans une plage de 5 à 80 g/m², en particulier de 10 à 30 g/m², en particulier au moins sur la face inférieure.

18. Feuille autoadhésive selon une des revendications 1 à 17, **caractérisée en ce qu'**au moins la couche d'adhésif de contact de la face supérieure est constituée d'adhésif de contact résistant aux plastifiants.

19. Feuille autoadhésive selon une des revendications 1 à 18, **caractérisée en ce que** la couche d'adhésif de contact est constituée d'adhésifs de contact différents entre la face supérieure et la face inférieure.

20. Feuille autoadhésive selon une des revendications 1 à 19, **caractérisée en ce que** l'adhérence d'au moins la face inférieure présente une force de retenue (mesurée selon DIN 1939) de l'ordre de 0,5 à 5 N, en particulier de 1,5 à 4,5 N et en particulier de 2,0 à 2,6 N.
